# FASCICULE DE BREVET EUROPEEN

(11) **EP 2 319 764 B1**
(45) Date de publication et mention de la délivrance du brevet: **03.07.2013**
(21) Numéro de dépôt: 10185980.9
(22) Date de dépôt: 01.10.2010
(51) Int. Cl.: B64G 1/22, B64G 1/64

(54) **Système de tirant actif permettant le maintien et la libération sans choc d'appendices spatiaux**
Aktives Zugankersystem, das die Beibehaltung und stoßfreie Lösung von Weltraumzubehör ermöglicht
System of tie rods enabling shock-free holding and release of space appendages

(30) Priorité: 10.11.2009 FR 0905401
(43) Date de publication de la demande: 11.05.2011
(73) Titulaire: Thales, 92200 Neuilly Sur Seine (FR)
(72) Inventeur: Legrand, Silvain, 06000, Nice (FR); Baudasse, Yannick, 06130, Grasse (FR)
(74) Mandataire: Esselin, Sophie

(56) Documents cités:
- EP-A1- 0 402 263
- FR-A1- 2 857 936
- JP-A- 10 310 100

## Description

La présente invention concerne le domaine spatial et, plus précisément, consiste en un système de tirant actif permettant le maintien et la libération sans choc d'appendices spatiaux.

Par appendices spatiaux, on entend des équipements spatiaux destinés à être déployés dans l'espace, tels que des générateurs solaires ou des antennes par exemple. L'invention consiste en une solution simple et robuste permettant la libération sans choc de tels appendices spatiaux.

Ce type de système a pour fonction, dans un premier temps, de maintenir en position stockée un ou des appendices spatiaux, c'est-à-dire, de façon générale, des éléments mobiles déployables de part et d'autre de la caisse du satellite, et, dans un second temps, de libérer sans choc lesdits appendices. L'invention concerne principalement, mais non exclusivement, le cas où les appendices spatiaux sont des générateurs solaires. Le système de maintien en position stockée et de libération des appendices est classiquement constitué principalement d'un écrou pétalable et d'un tirant de mise en tension. Concrètement, dans les systèmes connus, le tirant participe, avec l'écrou, à la mise en tension d'une série d'éléments empilés, tels que des générateurs solaires repliés les uns sur les autres dans le but de minimiser le volume du satellite en vue du lancement, et permettant le passage des charges de lancement par frottement.

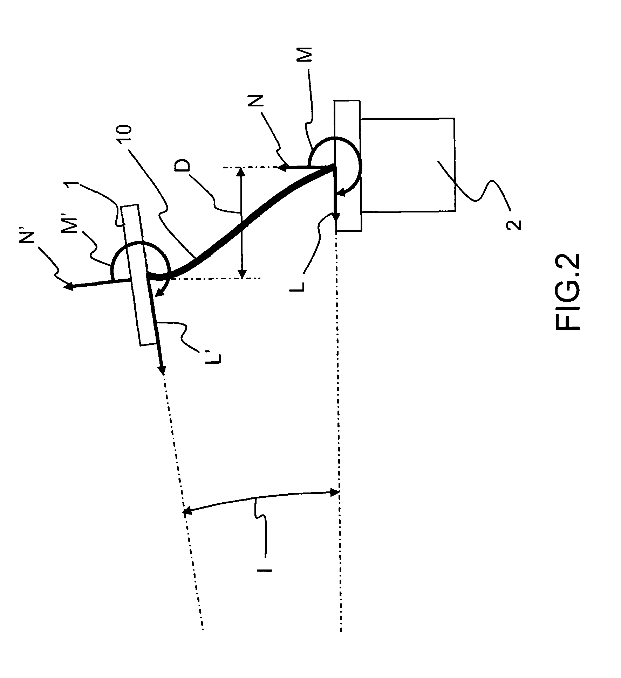

Cependant, il est connu que, dans ce type de dispositif, le tirant présente des défauts géométriques qui peuvent être importants, en particulier si le nombre d'éléments empilés est élevé. Comme le montre la figure 2, lesdits défauts géométriques peuvent être des défauts d'inclinaison ou de délocalisation par exemple. Ces défauts géométriques peuvent engendrer des défauts dynamiques se traduisant par des efforts radiaux ou des moments d'encastrement s'exerçant aux extrémités du tirant.

La non prise en compte de ces défauts peut engendrer de graves dysfonctionnements, allant jusqu'au non déploiement des appendices spatiaux, et pouvant donc impliquer une perte de la mission.

Un autre problème connu réside dans le choc pouvant se produire lors de la libération du tirant. Le dispositif d'écrou, mentionné précédemment, est chargé de libérer le tirant. Or, ledit tirant se trouve, au moment de sa libération, dans un état contraint et sa brusque libération peut entraîner des chocs pouvant altérer les appendices spatiaux ou le satellite lui-même. Dans le cadre de certains dispositifs actuels, le problème est double. En effet, dans un premier temps, le tirant est libéré par un verrou pyrotechnique dont l'explosion engendre un premier choc. Ensuite, le tirant étant sous tension avant d'être libéré, sa libération brusque, déjà évoquée, peut engendrer des dégradations au niveau des appendices spatiaux ou de la structure porteuse. Dans le but de minimiser ce problème, des écrous dits sans choc, ou « low shock » selon l'expression anglo-saxonne consacrée, ont été mis au point. Ce type d'écrous, complexe, est généralement mono-coup et peut être reconditionné. Cependant, l'aptitude « low shock » de ces écrous n'est applicable qu'au déclenchement de la libération du tirant, et non à la libération des appendices en tant que telle. En effet, les défauts géométriques du tirant ne sont pas réellement compensés et, particulièrement dans le cas où le tirant est de grande dimension, il subsiste une détente brusque du tirant pouvant engendrer un choc parfois important, le tirant venant percuter les appendices spatiaux. Ceci s'explique notamment par le fait que la libération du tirant sous contrainte reste sensible aux déviations angulaires dudit tirant.

En résumé, aucune solution satisfaisante n'existe dans l'état de la technique pour à la fois s'affranchir des défauts géométriques du tirant et permettre sa libération sans choc. L'invention propose une solution simple et robuste pour résoudre ce double problème. Elle repose essentiellement sur l'utilisation d'un dispositif de tirant actif, contrôlé par l'intermédiaire d'un réchauffeur interne audit tirant ou externe.

A cet effet, l'invention a pour objet un dispositif de tirant actif permettant le maintien et la libération sans choc d'appendices spatiaux, ledit dispositif de tirant actif comprenant :
- une embase fixe,
- un tirant actif vissé dans ladite embase fixe,
- un mécanisme escamotable de libération du tirant actif permettant, en position stockée, le maintien en place dudit tirant actif,
- un écrou de mise sous tension de l'ensemble, caractérisé en ce que ledit tirant actif comporte un réchauffeur interne ou externe, et en ce que ledit tirant actif est constitué au moins partiellement d'un matériau à coefficient de dilatation thermique élevé, supérieur ou égal à environ 20×10⁻⁶, par exemple de l'aluminium ou des alliages à mémoire de forme, de sorte que, sous l'action du réchauffeur interne ou externe, le tirant actif peut se dilater, escamotant le mécanisme escamotable de libération du tirant actif, et permettant par conséquent la libération sans choc desdits appendices spatiaux.

Dans un mode de mise en oeuvre de l'invention, le tirant actif est constitué de plusieurs couches de matériaux alternant des couches de matériaux à coefficient de dilatation thermique faible, inférieur ou égal à 1,5×10⁻⁶, tel que de l'invar^{™}, et des couches de matériaux à coefficient de dilatation thermique élevé, supérieur ou égal à environ 20×10⁻⁶, par exemple de l'aluminium ou des alliages à mémoire de forme.

Le matériau à coefficient de dilatation thermique faible peut être de l'invar^{™}.

Le matériau à coefficient de dilatation thermique élevé peut être de l'aluminium ou un quelconque matériau à mémoire de forme.

Les appendices spatiaux sont, par exemple, des générateurs solaires ou des antennes.

Avantageusement, le mécanisme escamotable de libération du tirant actif est constitué d'un ensemble de pinces escamotables maintenues en position par l'intermédiaire de ressorts.

Avantageusement, l'embase fixe peut comprendre une rotule dans laquelle le tirant actif est vissé, en vue de faciliter la libération sans choc dudit tirant actif.

L'invention consiste en outre en un procédé de libération sans choc d'appendices spatiaux, caractérisé en ce qu'il comprend l'utilisation d'un dispositif de tirant actif tel que précédemment décrit, et mettant en oeuvre les étapes suivantes :
- une étape de libération au cours de laquelle le réchauffeur interne ou externe du tirant actif est activé et provoque l'allongement dudit tirant actif, et, sous l'effet notamment de l'allongement du tirant actif, le mécanisme escamotable de libération du tirant actif se rétracte et laisse le passage libre au tirant actif,
- une étape de déploiement au cours de laquelle l'ouverture complète des appendices spatiaux est effectuée.

Avantageusement, le procédé selon l'invention peut comprendre en outre une étape de reconditionnement dudit dispositif de tirant actif.

Avantageusement, le tirant actif étant constitué d'un matériau à mémoire de forme, l'étape de reconditionnement se traduit par :
- le chauffage du tirant par l'action du réchauffeur interne ou externe,
- la mise en compression du tirant au moyen d'une presse,
- le refroidissement du tirant actif qui reprend sa forme initiale,
- le repositionnement des appendices spatiaux et la remise en place du mécanisme escamotable de libération du tirant actif.

D'autres caractéristiques et avantages de l'invention apparaîtront à l'aide de la description qui suit faite en regard des dessins annexés qui représentent :
- la figure 1 a : la vue schématique d'un satellite comprenant des appendices spatiaux en position stockée ;
- la figure 1b : la vue schématique d'un satellite comprenant des appendices spatiaux en cours de déploiement ;
- la figure 1c : la vue schématique d'un satellite comprenant des appendices spatiaux en position déployée ;
- la figure 2 : la représentation sous forme simplifiée du type de défauts géométriques et dynamiques que peut présenter un tirant ;
- la figure 3 : le schéma d'un exemple de système de tirant actif selon l'invention, en position stockée ;
- la figure 4 : le schéma d'un exemple de système de tirant actif selon l'invention, au déclenchement de la libération du tirant ;
- la figure 5 : le schéma d'un exemple de système de tirant actif selon l'invention, en début de phase de déploiement des appendices spatiaux ;
- la figure 6 : un exemple de tirant multicouche, selon un mode de mise en oeuvre de l'invention.

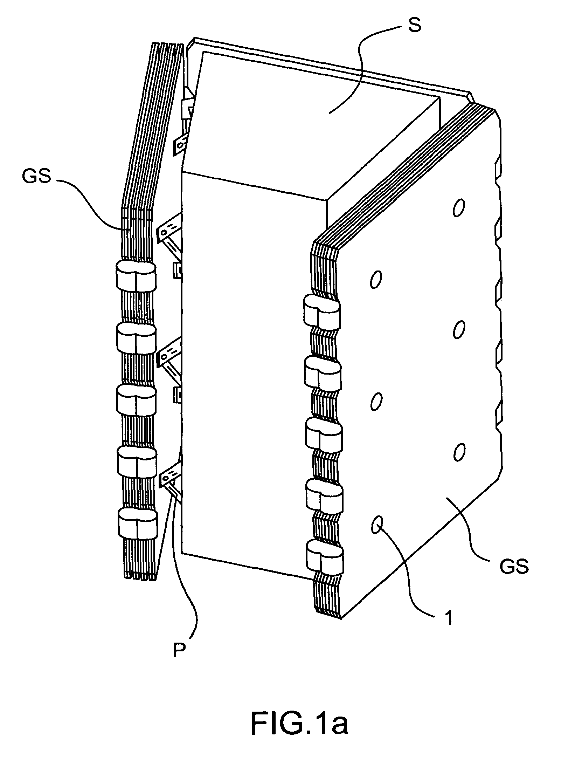

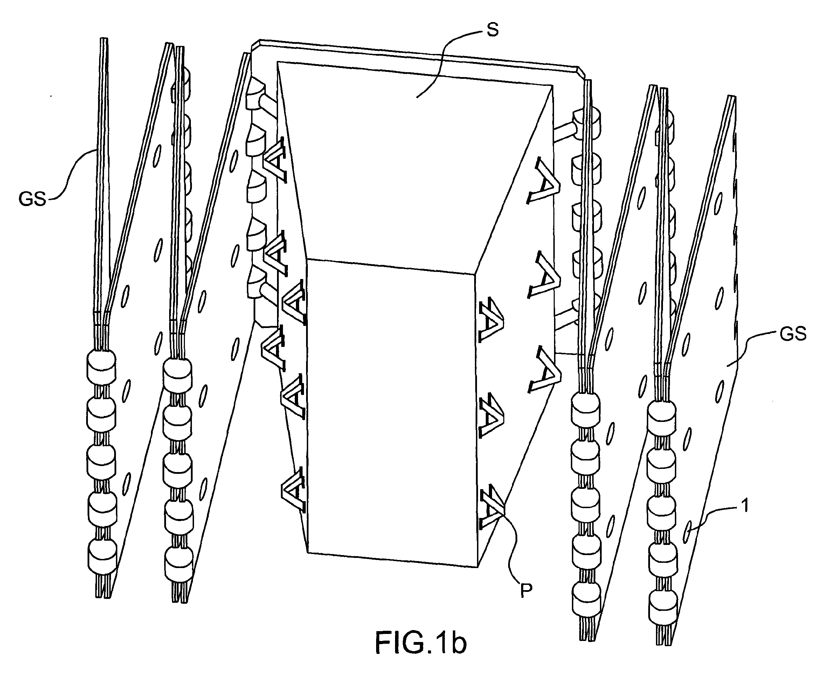

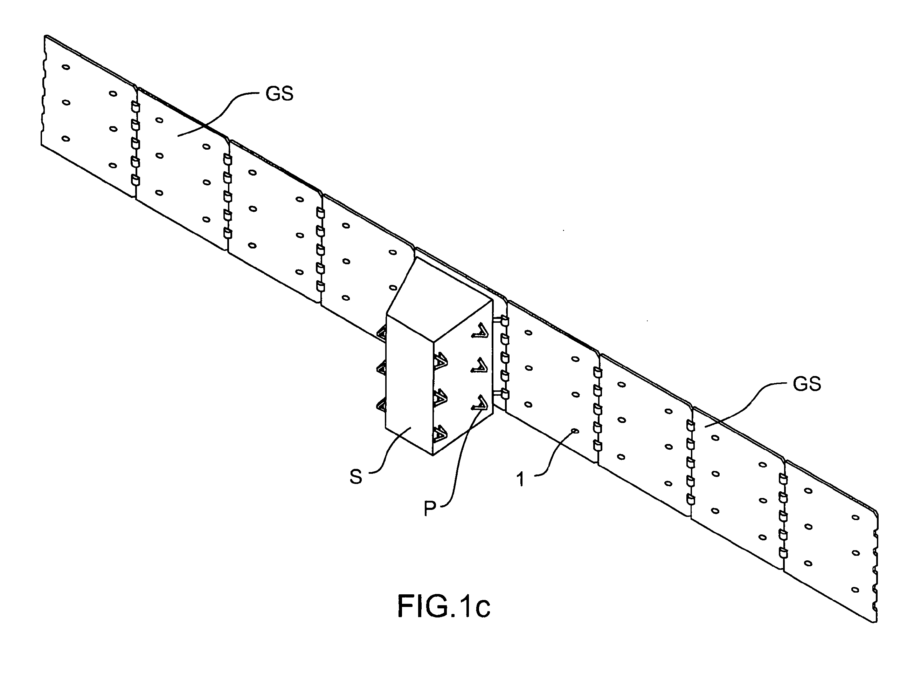

Les figures 1a, 1b, 1c ont pour objectif de présenter de manière très simple un exemple de satellite présentant des appendices spatiaux déployables. Sur ces trois figures, un satellite constitué d'une caisse S avec, de part et d'autre de ladite caisse S, des appendices spatiaux AP, tels que des générateurs solaires, est représenté. Sur la figure 1a, les appendices spatiaux AP sont en position stockée. Les appendices spatiaux AP sont ici constitués chacun de quatre panneaux repliés les uns sur les autres et maintenus en place par un dispositif adapté. Ce dispositif adapté comprend ici des tripodes P sur lesquels viennent reposer les appendices spatiaux AP repliés, chaque tripode P coopérant avec un dispositif non représenté constitué par exemple d'un écrou pétalable associé à un tirant, chaque tirant traversant chaque panneau au niveau d'une douille 1 ménagée et intégrée audit panneau. Comme on le constate sur les figures 1a, 1b, 1c, il y a dans ce contexte, pour chacun des deux appendices spatiaux AP, six tripodes P, associés à six écrous et six tirants, et six douilles par panneau.

Evidemment, c'est dans cette position stockée que le satellite doit être intégré à la coiffe du lanceur spatial chargé de son expédition.

La figure 1b représente le même satellite que sur la figure 1a, mais dont les appendices spatiaux AP sont en cours de déploiement. En effet, le moyen adapté de maintien en place des appendices spatiaux AP permet la libération desdits appendices spatiaux AP au moment opportun, et les panneaux solaires se déplient. Le déploiement peut être contrôlé par un moteur électrique non représenté.

Sur la figure 1c, les appendices spatiaux AP sont déployés, permettant au satellite de mener à bien sa mission.

La figure 2 illustre le type de défauts géométriques, déjà évoqués précédemment, que peut présenter un tirant dans un dispositif de maintien en position et de libération d'appendices spatiaux de l'état de la technique. Comme le montre la figure 2, des problème d'inclinaison I peuvent se poser du fait qu'il est impossible d'obtenir un parallélisme parfait entre les douilles 1 des appendices spatiaux et les écrous pétalables 2. De la même façon, un défaut d'alignement entre une douille 1 et un écrou 2 engendre un défaut géométrique de délocalisation D. Ces problèmes d'inclinaison I et de délocalisation D génèrent des défauts dynamiques, des contraintes s'exerçant sur le tirant 10. Par exemple, ledit tirant 10 peut subir des efforts radiaux L,N,L',N' s'exerçant à ses extrémités. Par ailleurs, des moments d'encastrement M,M' dus à la torsion du tirant 10 peuvent s'exercer au niveau de l'écrou 2 et de la douille 1. Du fait de ces défauts géométriques, il peut être difficile d'obtenir la libération des appendices spatiaux, ce qui peut avoir des conséquences graves sur le déroulement de la mission. En effet, dans le cas où ce type de défauts géométriques entraînerait l'impossibilité de déployer, par exemple, des générateurs solaires, la mission serait perdue.

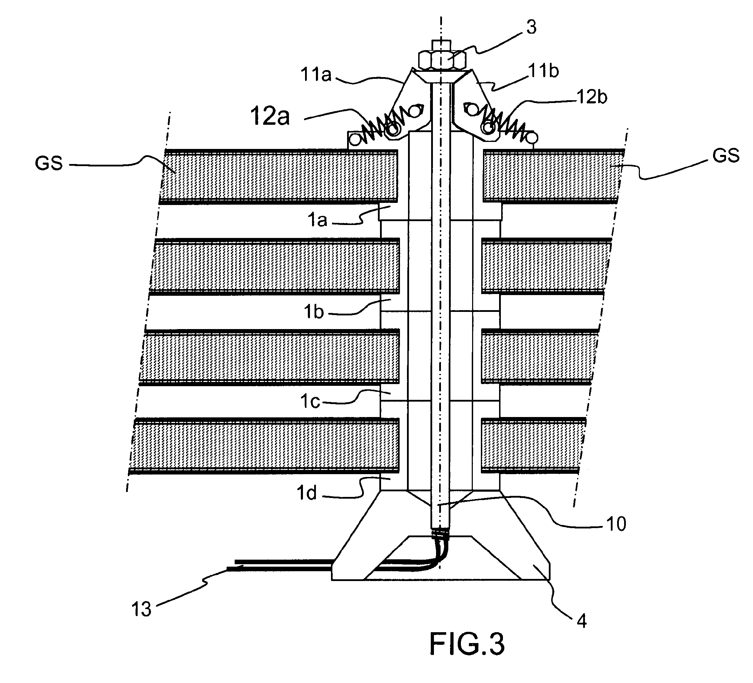

Les figures 3, 4, 5 représentent le dispositif selon l'invention, dans un exemple de mise en oeuvre, au cours de trois phases d'utilisation.

La figure 3 représente le dispositif selon l'invention en position stockée. Les appendices spatiaux AP déployables maintenus en place par le dispositif selon l'invention peuvent par exemple être des générateurs solaires. Ils sont dans l'exemple des figures 3, 4, 5 constitués de quatre panneaux repliés les uns sur les autres. Il peut s'agir de tout autre type d'appendices spatiaux déployables. Les appendices spatiaux AP ne sont pas représentés en entier, l'attention étant attirée sur le dispositif selon l'invention. Ce dispositif comprend une embase fixe 4, dans laquelle est vissé un tirant actif 10 intégrant un réchauffeur interne 13 ; ledit dispositif comprend également un écrou de mise en tension 3 et un mécanisme escamotable de libération du tirant 11a, 11b, 12a, 12b.

Il faut noter qu'en lieu et place ou en complément du réchauffeur interne 13, le dispositif selon l'invention peut comprendre un réchauffeur externe, non représenté.

Au sein de chaque panneau, au moins une ouverture est ménagée, au sein de laquelle est intégrée une douille 1 a, 1 b, 1 c, 1 d. Ces douilles 1 a à 1 d permettent le passage du tirant actif 10. En fonction de la taille des appendices spatiaux, il peut y avoir plusieurs ouvertures et autant de douilles par élément. Par exemple, comme cela est représenté sur les figures 1 a à 1 c, chaque panneau d'un appendice spatial AP peut comprendre six douilles.

En position stockée, le réchauffeur interne 13 est inactif. Les panneaux sont empilés les uns sur les autres et sont traversés par le tirant actif 10. A l'extrémité opposée à l'embase fixe 4, le mécanisme escamotable de libération du tirant 11 a, 11 b, 12a, 12b permet le maintien en place de l'empilement des panneaux. Ce mécanisme escamotable de libération du tirant 11 a, 11 b, 12a, 12b est constitué, par exemple, d'un ensemble de pinces escamotables 11 a et 11 b, respectivement maintenues en positions par des ressorts 12a et 12b. Un exemple de mécanisme escamotable de libération du tirant adapté à la fonction de maintien en place et de libération nécessaire à la mise en oeuvre de l'invention est notamment décrit dans le brevet français n° 2857936. La fonction de ce mécanisme escamotable de libération du tirant 11a, 11 b, 12a, 12b consiste d'une part à coopérer avec le tirant actif 10 pour maintenir les appendices spatiaux en position repliée, ce qui permettra de reprendre les charges dues au lancement, et d'autre part de s'effacer en l'absence de contrainte, pour permettre le passage du tirant actif 10.

Enfin, le dispositif comprend un écrou 3 de mise en tension l'ensemble. Cette mise en tension permet notamment le passage des charges de lancement par frottement entre les différents éléments.

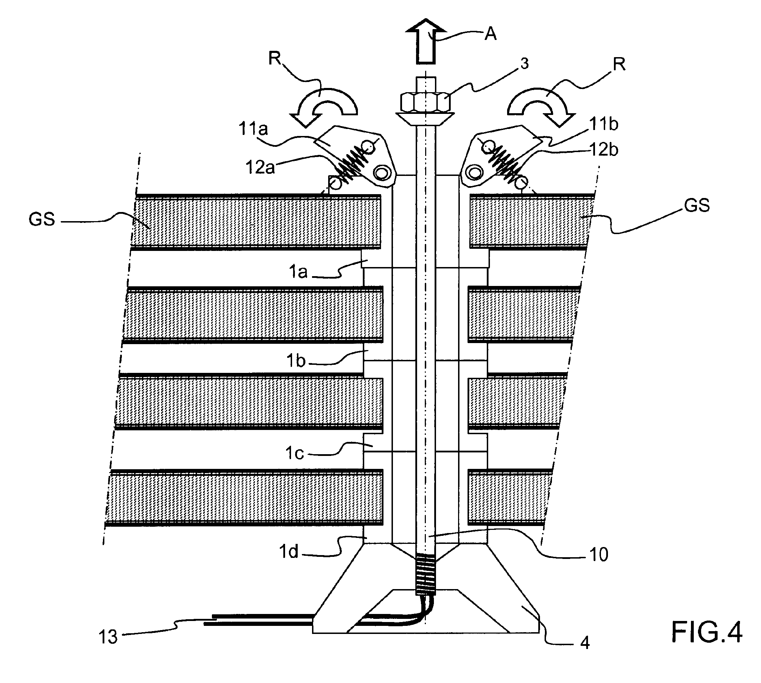

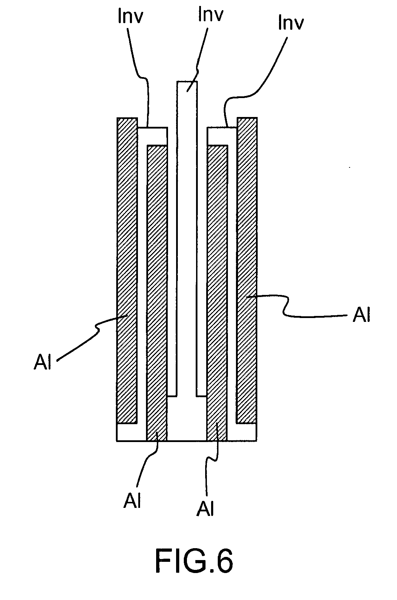

Le schéma de la figure 4 représente la phase de libération du tirant actif 10. Au moment opportun, c'est-à-dire en vue du déploiement des appendices spatiaux AP, le réchauffeur interne 13 est activé. Ledit réchauffeur interne 13 permet d'augmenter la température du tirant actif 10 qui, étant constitué d'un matériau adéquate, se dilate sous l'effet de la chaleur. Le matériau constitutif du tirant actif 10 peut être un matériau à fort coefficient de dilatation thermique supérieur ou égal à 20×10⁻⁶, comme par exemple de l'aluminium. Il peut en outre s'agir d'un alliage à mémoire de forme. Le tirant peut également avoir une structure plus complexe telle que celle décrite à la figure 6. Sous l'effet de la dilatation A du tirant actif 10, le mécanisme escamotable de libération du tirant 11 a, 11b, 12a, 12b se replie R sur les ressorts 12a, 12b pour céder le passage au tirant actif 10. Le déploiement des appendices spatiaux peut donc débuter. On notera que, même si cela n'est pas représenté sur les figures, l'embase fixe 4 peut comporter une rotule dans laquelle est fixée le tirant actif 10, la présence de cette rotule pouvant faciliter la libération dudit tirant actif 10.

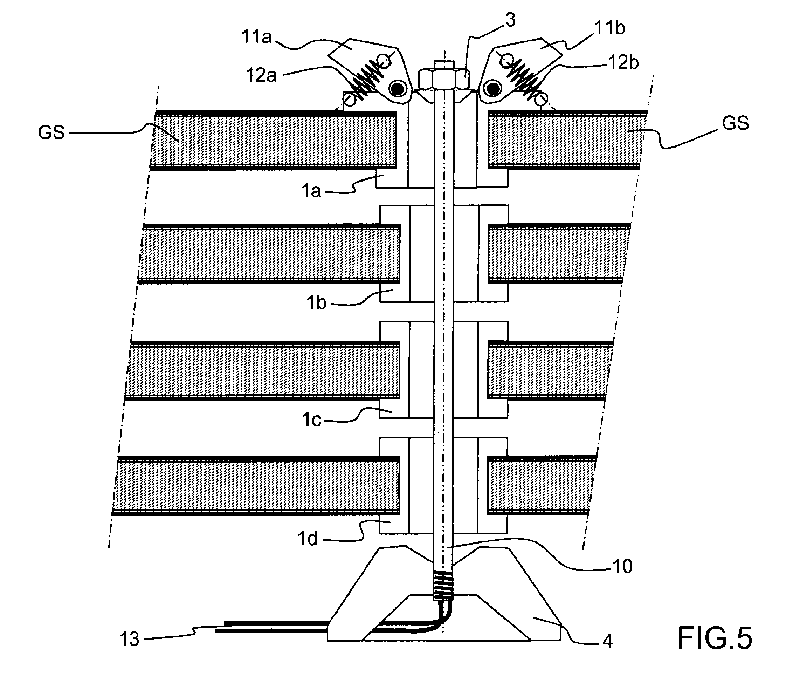

La figure 5 représente simplement le début du déploiement des appendices spatiaux AP. Du fait de l'allongement du tirant actif 10, ledit tirant actif passant à travers les douilles 1a à 1d des panneaux, sans contact, les panneaux peuvent se déplier. Lorsque l'allongement du tirant actif est suffisant, le réchauffeur interne 13 peut être désactivé.

On notera que durant une phase d'essais au sol, ce type de dispositif peut, après déploiement des appendices, être reconditionné, dès lors que le tirant actif 10 est constitué d'un alliage à mémoire de forme. Dans ce cas, il suffit de replier les panneaux en position stockée et, après le reconditionnement du tirant actif 10, de remettre en place le mécanisme escamotable de libération du tirant 11a, 11b, 12a, 12b et, si besoin, de resserrer l'écrou 3.

La figure 6 représente une solution alternative à celle représentée dans les figures 3 à 5 concernant la structure du tirant actif 10. En effet, des contraintes d'aménagement peuvent imposer un tirant actif 10 de longueur réduite. On pourra utiliser dans ce cas un tirant du type de celui de la figure 6, constitué de plusieurs étages alternant des étages de matériau, notés Al sur la figure, à coefficient de dilatation thermique élevé, supérieur ou égal à 20×10⁻⁶, par exemple de l'aluminium ou des alliages à mémoire de forme, et des étages de matériau, notés Inv sur la figure, à coefficient de dilatation thermique très faible, inférieur ou égal à 1,5×10⁻⁶, tel que de l'invar^{™}.

En résumé, l'invention présente l'avantage de constituer une solution simple et robuste aux problèmes techniques énumérés précédemment, relatifs à la libération sans choc d'appendices spatiaux et à la reprise des défauts géométriques des tirants utilisés dans les dispositifs permettant le maintien et la libération desdits appendices spatiaux. La solution proposée par la présente invention consiste principalement à utiliser un dispositif de tirant actif comportant un réchauffeur interne.

Il est à noter que la présente invention est utilisable dans de nombreux cas où le déploiement d'appendices spatiaux est nécessaire, qu'il s'agisse de générateurs solaires, d'antennes, ou encore de panneaux de protection thermique par exemple.

## Revendications

1. Dispositif de tirant actif permettant le maintien et la libération sans choc d'appendices spatiaux (AP), ledit dispositif de tirant actif comprenant :
• une embase fixe (4),
• un tirant actif (10) vissé dans ladite embase fixe (4),
• un mécanisme escamotable de libération (11 a, 11 b, 12a, 12b) du tirant actif (10) permettant, en position stockée, le maintien en place dudit tirant actif (10),
• un écrou (3) de mise sous tension de l'ensemble,
**caractérisé en ce que** ledit tirant actif (10) comporte un réchauffeur interne (13) ou externe, et **en ce que** ledit tirant actif (10) est constitué au moins partiellement d'un matériau à coefficient de dilatation thermique élevé (Al), supérieur ou égal à environ 20×10⁻⁶, par exemple de l'aluminium ou des alliages à mémoire de forme, de sorte que, sous l'action du réchauffeur interne (13) ou externe, le tirant actif (10) peut se dilater, escamotant le mécanisme escamotable de libération (11a, 11 b, 12a, 12b) du tirant actif (10), et permettant par conséquent la libération sans choc desdits appendices spatiaux (AP).

2. Dispositif selon la revendication 1, **caractérisé en ce que** le tirant actif (10) est constitué de plusieurs couches de matériaux alternant des couches de matériaux à coefficient de dilatation thermique faible (Inv), inférieur ou égal à 1,5×10⁻⁶, tel que de l'invar^{™}, et des couches de matériaux à coefficient de dilatation thermique élevé (Al), supérieur ou égal à environ 20×10⁻⁶, par exemple de l'aluminium ou des alliages à mémoire de forme.

3. Dispositif selon la revendication 2, **caractérisé en ce que** le matériau à coefficient de dilatation thermique faible (Inv) est de l'invar^{™}.

4. Dispositif selon l'une quelconque des revendications 1 à 3, **caractérisé en ce que** le matériau à coefficient de dilatation thermique élevé (Al) est de l'aluminium ou un quelconque matériau à mémoire de forme.

5. Dispositif selon l'une quelconque des revendications précédentes, **caractérisé en ce que** les appendices spatiaux (AP) sont des générateurs solaires, des antennes ou des panneaux de protection thermique.

6. Dispositif selon l'une quelconque des revendications 1 à 5, **caractérisé en ce que** le mécanisme escamotable de libération (11a, 11b, 12a, 12b) du tirant actif (10) est constitué d'un ensemble de pinces escamotables (11a, 11b) maintenues en position par l'intermédiaire de ressorts (12a, 12b).

7. Dispositif selon l'une quelconque des revendications précédentes, **caractérisé en ce que** l'embase fixe (4) comprend une rotule dans laquelle le tirant actif (10) est vissé, en vue de faciliter la libération sans choc dudit tirant actif (10).

8. Procédé de libération sans choc d'appendices spatiaux, **caractérisé en ce qu'**il comprend l'utilisation d'un dispositif de tirant actif (10) selon l'une quelconque des revendications 1 à 7, et **en ce qu'**il met en oeuvre les étapes suivantes :
• une étape de libération au cours de laquelle le réchauffeur interne (13) ou externe du tirant actif (10) est activé et provoque l'allongement dudit tirant actif (10), et, sous l'effet notamment de l'allongement du tirant actif (10), le mécanisme escamotable de libération (11a, 11 b, 12a, 12b) du tirant actif (10) s'efface et laisse le passage libre au tirant actif (10),
• une étape de déploiement au cours de laquelle l'ouverture complète des appendices spatiaux (AP) est effectuée.

9. Procédé selon la revendication 8, **caractérisé en ce qu'**il comprend en outre une étape de reconditionnement dudit dispositif de tirant actif (10).

10. Procédé selon la revendication 9, **caractérisé en ce que**, le tirant actif (10) étant constitué d'un matériau à mémoire de forme, l'étape de reconditionnement se traduit par :
• le chauffage du tirant (10) par l'action du réchauffeur interne (13) ou externe,
• la mise en compression du tirant actif (10) au moyen d'une presse,
• le refroidissement du tirant actif (10), qui reprend sa forme initiale,
• le repositionnement des appendices spatiaux (AP) et la remise en place du mécanisme escamotable de libération (11a, 11b, 12a, 12b) du tirant actif (10).

## Patentansprüche

1. Aktive Zugankervorrichtung zum schockfreien Halten und Lösen von Weltraumzubehörteilen (AP), wobei die aktive Zugankervorrichtung Folgendes umfasst:
• eine feste Basis (4),
• einen aktiven Zugstab (10), der in die feste Basis (4) geschraubt ist,
• einen zurückziehbaren Lösemechanismus (11a, 11b, 12a, 12b) des aktiven Zugstabs (10), der in der verstauten Position ein Festhalten des aktiven Zugstabs (10) zulässt,
• eine Mutter (3) zum Festziehen der Baugruppe,
**dadurch gekennzeichnet, dass** der aktive Zugstab (10) eine interne (13) oder externe Heizung umfasst, und dadurch, dass der aktive Zugstab (10) wenigstens teilweise aus einem Material mit hohem Wärmeausdehnungskoeffizient (Al) gebildet ist, der gleich oder größer als etwa 20x10⁻⁶ ist, zum Beispiel aus Aluminium oder Formgedächtnislegierungen, so dass sich der aktive Zugstab (10) unter der Wirkung der internen (13) oder externen Heizung ausdehnen kann und somit den zurückziehbaren Lösemechanismus (11a, 11b, 12a, 12b) des aktiven Zugstabs (10) zurückzieht und demzufolge ein schockfreies Lösen der Weltraumzubehörteile (AP) zulässt.

2. Vorrichtung nach Anspruch 1, **dadurch gekennzeichnet, dass** der aktive Zugstab (10) von mehreren Materialschichten gebildet wird, die zwischen Materialschichten mit niedrigem Wärmeausdehnungskoeffizient (Inv), der gleich oder kleiner als 1,5x10⁻⁶ ist, wie z.B. Invar^{™}, und Materialschichten mit hohem Wärmeausdehnungskoeffizient (Al) abwechseln, der gleich oder größer als etwa 20x10⁻⁶ ist, zum Beispiel aus Aluminium oder Formgedächtnislegierungen.

3. Vorrichtung nach Anspruch 2, **dadurch gekennzeichnet, dass** das Material mit niedrigem Wärmeausdehnungskoeffizent (Inv) Invar^{™} ist.

4. Vorrichtung nach einem der Ansprüche 1 bis 3, **dadurch gekennzeichnet, dass** das Material mit hohem Wärmeausdehnungskoeffizient (Al) Aluminium oder ein beliebiges Formgedächtnismaterial ist.

5. Vorrichtung nach einem der vorherigen Ansprüche, **dadurch gekennzeichnet, dass** die Weltraumzubehörteile (AP) Solargeneratoren, Antennen oder Wärmeschutzplatten sind.

6. Vorrichtung nach einem der Ansprüche 1 bis 5, **dadurch gekennzeichnet, dass** der zurückziehbare Lösemechanismus (11a, 11b, 12a, 12b) des aktiven Zugstabs (10) von einem Satz von zurückziehbaren Klammern (11a, 11b) gebildet wird, die mit Federn (12a, 12b) festgehalten werden.

7. Vorrichtung nach einem der vorherigen Ansprüche, **dadurch gekennzeichnet, dass** die feste Basis (4) ein Kugelgelenk umfasst, in das der aktive Zugstab (10) geschraubt wird, um das schockfreie Lösen des aktiven Zugstabs (10) zu erleichtern.

8. Verfahren zum schockfreien Lösen von Weltraumzubehörteilen, **dadurch gekennzeichnet, dass** es die Verwendung einer aktiven Zugstabvorrichtung (10) nach einem der Ansprüche 1 bis 7 beinhaltet, und dadurch, dass es die folgenden Schritte ausführt:
• einen Löseschritt, bei dem die interne (13) oder externe Heizung des aktiven Zugstabs (10) aktiviert wird und eine Ausdehnung des aktiven Zugstabs (10) bewirkt, und der zurückziehbare Lösemechanismus (11a, 11b, 12a, 12b) des aktiven Zugstabs (10) sich insbesondere unter der Wirkung der Ausdehnung des aktiven Zugstabs (10) entfernt und eine freie Passage des aktiven Zugstabs (10) zulässt,
• einen Entfaltungsschritt, bei dem die Weltraumzubehörteile (AP) völlig geöffnet werden.

9. Verfahren nach Anspruch 8, **dadurch gekennzeichnet, dass** es ferner einen Schritt des Rekonditionierens der aktiven Zugstabvorrichtung (10) beinhaltet.

10. Verfahren nach Anspruch 9, **dadurch gekennzeichnet, dass**, da der aktive Zugstab (10) von einem Formgedächtnismaterial gebildet wird, der Rekonditionierungsschritt Folgendes beinhaltet:
• Erhitzen des Zugstabs (10) mittels der internen (13) oder externen Heizung,
• Komprimieren des aktiven Zugstabs (10) mit einer Presse,
• Kühlen des aktiven Zugstabs (10), der in seine ursprüngliche Form zurückkehrt,
• Umpositionieren der Weltraumzubehörteile (AP) und Zurückführen des zurückziehbaren Lösemechanismus (11a, 11b, 12a, 12b) des aktiven Zugstabs (10) in seine Anfangsposition.

## Claims

1. An active tie-rod device for the shock-free holding and releasing of spatial attachments (AP), said active tie-rod device comprising:
• a fixed base (4),
• an active tie-rod (10) screwed into said fixed base (4),
• a retractable release mechanism (11a, 11b, 12a, 12b) for said active tie-rod (10) allowing, in the stored position, said active tie-rod (10) to be held in place,
• a nut (3) for tensioning the assembly,
**characterised in that** said active tie-rod (10) comprises an internal (13) or external heater, and **in that** said active tie-rod (10) is constituted at least partially by a material with a high thermal expansion coefficient (Al) that is greater than or equal to approximately 20x10⁻⁶, for example, made from aluminium or shape memory alloys, so that, under the effect of said internal (13) or external heater, said active tie-rod (10) can expand thus retracting said retractable release mechanism (11a, 11b, 12a, 12b) for said active tie-rod (10) and consequently allowing a shock-free release of said spatial attachments (AP).

2. The device according to claim 1, **characterised in that** said active tie-rod (10) is constituted by a plurality of layers of materials alternating between layers of materials with a low thermal expansion coefficient (Inv) that is less than or equal to 1.5x10⁻⁶, such as Invar^{™}, and layers of materials with a high expansion coefficient (Al) that is greater than or equal to approximately 20x10⁻⁶, for example, made from aluminium or shape memory alloys.

3. The device according to claim 2, **characterised in that** the material with a low thermal expansion coefficient (Inv) is Invar^{™}.

4. The device according to any one of claims 1 to 3, **characterised in that** the material with a high thermal expansion coefficient (Al) is aluminium or any type of shape memory alloy.

5. The device according to any one of the preceding claims, **characterised in that** said spatial attachments (AP) are solar generators, antennae or thermal protection panels.

6. The device according to any one of claims 1 to 5, **characterised in that** said retractable release mechanism (11a, 11b, 12a, 12b) for said active tie-rod (10) is constituted by a set of retractable clips (11a, 11b) that are held in position by means of springs (12a, 12b).

7. The device according to any one of the preceding claims, **characterised in that** said fixed base (4) comprises a ball joint into which said active tie-rod (10) is screwed so as to facilitate the shock-free release of said active tie-rod (10).

8. A method for the shock-free release of spatial attachments, **characterised in that** it comprises the use of an active tie-rod device (10) according to any one of claims 1 to 7, and **in that** it implements the following steps:
• a release step during which the internal (13) or external heater of said active tie-rod (10) is activated and causes the extension of said active tie-rod (10) and, notably under the effect of the extension of said active tie-rod (10), said retractable release mechanism (11a, 11b, 12a, 12b) for said active tie-rod (10) moves clear and allows free passage for said active tie-rod (10),
• a deployment step during which said spatial attachments (AP) are fully opened.

9. The method according to claim 8, **characterised in that** it further comprises a step of re-establishing said active tie-rod device (10).

10. The method according to claim 9, **characterised in that**, with said active tie-rod (10) being constituted by a shape memory material, said re-establishing step involves:
• heating said tie-rod (10) by means of said internal (13) or external heater,
• compressing said active tie-rod (10) by means of a press,
• cooling said active tie-rod (10), which returns to its initial shape,
• repositioning said spatial attachments (AP) and returning said retractable release mechanism (11a, 11b, 12a, 12b) for said active tie-rod (10) to its initial position.
